# EUROPÄISCHE PATENTSCHRIFT

(11) **EP 3 700 337 B1**
(45) Veröffentlichungstag und Bekanntmachung des Hinweises auf die Patenterteilung: **27.11.2024**
(21) Anmeldenummer: 18796388.9
(22) Anmeldetag: 24.10.2018
(51) Int. Cl.: A01M 21/04

(54) **VORRICHTUNG MIT EINEM SYSTEM ZUR HALBAUTOMATISCHEN UND/ODER AUTOMATISCHEN UNKRAUTENTFERNUNG**
APPARATUS WITH A SYSTEM FOR SEMI-AUTOMATIC AND/OR AUTOMATIC WEED REMOVAL
DISPOSITIF AVEC UN SYSTÈME DE DÉSHERBAGE SEMI-AUTOMATIQUE ET/OU AUTOMATIQUE

(30) Priorität: 25.10.2017 DE 102017124934
(43) Veröffentlichungstag der Anmeldung: 02.09.2020
(73) Patentinhaber: M-Farms GmbH, 82166 Gräfelfing (DE)
(72) Erfinder: SCHLEMMER, Christian, 80636 München (DE)
(74) Vertreter: Wende, Christian Werner
(86) Internationale Anmeldenummer: PCT/EP2018/079080
(87) Internationale Veröffentlichungsnummer: WO 2019/081542

(56) Entgegenhaltungen:
- EP-A1- 3 165 089
- WO-A1-2016/191825
- WO-A1-2017/002093
- DE-A1- 102015 209 879
- US-A1- 2015 027 041
- US-B1- 9 737 068

## Beschreibung

Die vorliegende Erfindung betrifft eine Vorrichtung mit einem System zur halbautomatischen und/oder automatischen Unkrautentfernung gem. Anspruch 1.

Im Bereich der Landwirtschaft, aber auch im Bereich der Botanik und der Ausbildung im Zusammenhang mit Land- und Forstwirtschaftsberufen, aber auch im Bereich Biologie und Botanik, ist es notwendig, Unkrautpflanzen sicher erkennen und ggf. entfernen zu können.

Aus der DE 43 29 343 A1 ist bereits ein feldtaugliches bildanalytisches Verfahren zur automatischen Erkennung und Bekämpfung von Unkrautarten bekannt. Dabei wird ein Rechner mit Kamera vor Ort aufgebaut, um dort Unkräuter erkennen zu können. Allerdings kann nur eine bestimmte Anzahl von Unkräutern erkannt werden und darüber hinaus ist das aus der DE 43 29 343 A1 bekannte System vergleichsweise groß und deshalb nicht gut handhabbar.

Ferner offenbart die DE 196 40 641 A1 ein Verfahren und eine Vorrichtung zur Erkennung von potentiellen und tatsächlichen Standorten von Unkraut sowie der Unkrautbekämpfung, oder Unkrautvorsorge auf Wegen und Plätzen in einem Arbeitsgang. Hierbei wird mit Hilfe von Sensoren oder dergleichen die potentiell möglichen Wuchsorte von Unkräutern detektiert oder erkannt und das potentiell zu erwartende oder gegenwärtige Wachstum der Unkräuter dann durch Bearbeitung oder durch Manipulation der Unkräuter oder der Wuchsorte gänzlich oder zeitweise verhindert.

Zudem ist in der DE 10 2013 222 776 A1 eine Einrichtung zur Beschädigung eines Beikrauts mit einem Stempel zur Druckbeaufschlagung des Beikrauts und eine Führungseinrichtung zur Führung des Stempels gezeigt, wobei die Führungseinrichtung beweglich in einem Führungselement gelagert Ist.

Aufgrund des nicht stattfindenden Abgleichs der erfassten Unkrautbilddaten mit Unkrautbilddaten, die in einer Datenbank oder einer Servereinheit hinterlegt sind, kann es bei den Unkrautentfernungssystemen im Stand der Technik zu ungenauen und fehlerbehafteten Bestimmungen von Unkrautpflanzen kommen. Insbesondere kann eine derart ungenaue Bestimmung auch dazu führen, dass nicht zu entfernende Kulturpflanzen (z.B. Getreide) ungewollt entfernt werden und so der Ernteertrag gesenkt wird.

Weitere Systeme sind z.B. aus US 9 737 068 B1, US 2015/027041 A1, WO 2016/191825 A1, WO 2017/002093 A1, DE 10 2015 209879 A1 und EP 3 165 089 A1 bekannt. 9I

Es ist daher die Aufgabe der vorliegenden Erfindung, ein System zur halbautomatischen und/oder automatischen Unkrautentfernung der eingangs genannten Art in vorteilhafter Weise weiterzubilden, insbesondere dahingehend, dass Unkrautpflanzen genauer bestimmbar sind sowie effizienter und zuverlässiger entfernbar sind.

Diese Aufgabe wird erfindungsgemäß gelöst durch eine Vorrichtung mit einem System zur halbautomatischen und/oder automatischen Unkrautentfernung mit den Merkmalen des Anspruchs 1. Danach Ist vorgesehen, dass ein System zur halbautomatischen und/oder automatischen Unkrautentfernung mit wenigstens einem System zur automatischen Erkennung von Unkraut vorgesehen ist, das wenigstens einen optischen Sensor und eine zentrale Servereinheit aufweist, mit wenigstens einem Kommunikationsnetzwerk, mit wenigstens einer Steuerungs- und/oder Regelungseinrichtung und mit wenigstens einer Unkrautentfernungseinrichtung versehen ist, wobei der optische Sensor, die Servereinheit und die Steuerungs- und/oder Regelungseinrichtung mittels des Kommunikationsnetzwerks in Datenverbindung stehen, wobei mittels des optischen Sensors Bilddaten wenigstens eines Unkrauts erzeugbar und über das Kommunikationsnetzwerk an die Servereinheit übertragbar sind, welche die übertragenen Bilddaten dahingehend auswertet, dass das Unkraut bestimmbar ist, und wobei mittels der Servereinheit im Falle einer eindeutigen Bestimmung des Unkrauts Unkrautbestätigungsdaten über das Kommunikationsnetzwerk an die Steuerungs- und/oder Regelungseinrichtung übertragbar sind, welche in Antwort auf diese Unkrautbestätigungsdaten die Unkrautentfernungseinrichtung steuert und/oder regelt, so dass das durch den optischen Sensor erfasste Unkraut entfernbar ist.

Die Erfindung basiert auf dem Grundgedanken, dass durch einen erfolgreichen serverbasierten Abgleich von Unkrautbilddaten, die von dem System von einer oder mehreren Unkrautpflanzen am Wuchsort erfasst worden sind, entsprechend die Unkrautentfernungseinrichtung zu steuern und/oder zu regeln und infolgedessen das ausgewählte Unkraut zu entfernen. Dadurch kann die Unkrautentfernung einerseits wesentlich effizienter und genauer durchgeführt werden. Andererseits besteht ein weiterer großer Vorteil des serverbasierten Abgleichs der Unkrautbilddaten darin, dass die Bestimmung des Unkrauts in jedem beliebigen Wachstumsstadium bzw. zu jeder Jahreszeit sowie die danach folgende Unkrautentfernung durch die Unkrautentfernungseinrichtung automatisch und in Echtzeit durchgeführt werden können. Durch das System wie vorstehend beschrieben wird weiter eine pestizidfreie Unkrautentfernung angestrebt und es soll hierdurch ein wirksames Hilfsmittel für die Landwirtschaft bereitgestellt werden. Insbesondere besteht eine große Motivation darin, Unkrautvernichtungsmittel, wie z.B. Glyphosat, jedenfalls im Einsatzvolumen zu verringern, vorzugsweise sogar komplett zu vermelden.

Durch den Einsatz eines halbautomatischen bzw. automatischen Pflanzenerkennungssystems soll online eine Erkennung von Unkrautpflanzen erfolgen und dann eine entsprechende (halb-)automatische Unkrautentfernung mit mechanischen oder thermischen Mitteln erfolgen, nicht aber mittels Pestiziden. Grundsätzlich ist aber der zusätzliche Einsatz von Pestiziden natürlich auch weiterhin auch im Zusammenhang mit dem vorgestellten System möglich. Die vorliegende Erfindung stellt weiter eine Lösung bereit, die zum einen eine (halb-)automatische Pflanzenerkennung und zugleich eine Ansteuerung der Unkrautentfernungseinrichtung in Echtzeit (d.h. mit minimalem zeitlichen Versatz nach der Pflanzenerkennung online) ermöglicht. Ein schnelles Ansprechverhalten und ein zugleich sicheres mechanisches Entfernen der erkannten Unkrautpflanze wird gewährleistet. Dies ist insbesondere auch im laufenden Betrieb und auch bei entsprechender Fahrgeschwindigkeit des landwirtschaftlichen Nutzfahrzeugs möglich.

Ferner kann vorgesehen sein, dass die zentrale Servereinheit des Systems zur automatischen Erkennung von Pflanzen wenigstens eine automatische Bildverarbeitungseinheit, wenigstens eine Unkrautdatenbankeinheit, in der Unkrautdaten eingespeichert sind, und wenigstens eine Unkrautbilddatenbankeinheit umfasst, in der Bilddaten betreffend Unkrautpflanzen eingespeichert sind. Die automatische Bildverarbeitungseinheit wertet die übertragenen Bilddaten des Unkrauts durch Abgleich mit der Unkrautdatenbankeinheit und der Unkrautbilddatenbankeinheit dahingehend aus, dass das Unkraut eindeutig bestimmbar ist.

Im Übrigen kann vorgesehen sein, dass die Unkrautentfernungseinrichtung bezogen auf eine Referenzposition, insbesondere eine Referenzposition des optischen Sensors, innerhalb eines Rasters positionierbar ist. Das Raster erlaubt eine noch präzisere Positionierung der Unkrautentfernungseinrichtung bezüglich des durch die Kamera erfassten Unkrauts bzw. der Unkräuter, so dass diese noch effizienter entfernt werden können. Aufgrund der Position der Kamera, die für die Unkrautentfernungseinrichtung als Referenz dient, kann zudem eine Kalibrierung der Unkrautentfernungseinrichtung (z.B. bei wechselnden Umgebungsbedingungen) sehr einfach und schnell vorgenommen werden. Die Kamera ist dabei an einer Position an dem System zur halbautomatischen und/oder automatischen Unkrautentfernung angeordnet, welche in dessen Bewegungsrichtung vor der räumlich veränderbaren Position der Unkrautentfernungseinrichtung liegt.

Weiter ist vorstellbar, dass die Unkrautentfernungseinrichtung wenigstens eine Ausgabedüse wenigstens eines Unkrautvemichtungsmitteis zur chemischen Unkrautentfernung aufweist. Da bereits sehr wirksame bzw. sehr spezialisierte chemische Unkrautentfernungsmittel erhältlich sind, können je nach vorkommender Unkrautspezies diese gezielt und dadurch besonders effizient entfernt werden. Ferner können auch mehrere Unkrautvernichtungsmittel verwendet oder miteinander kombiniert werden, um gewisse Unkrautspezies noch effizienter zu entfernen.

In diesem Zusammenhang kann weiter vorgesehen sein, dass eine Unkrautvernichtungsmitteldatenbankeinheit vorgesehen ist, die mit der Servereinheit in Datenverbindung steht und in der Unkrautvernichtungsmitteldaten eingespeichert sind. Ferner ist denkbar, dass in der Unkrautvernichtungsmitteldatenbankeinheit Verknüpfungsdaten eingespeichert sind, mittels derer die Unkrautvernichtungsmitteldaten mit den Bilddaten der Unkräuter durch ein Datenauswertemodul verknüpfbar sind. Insbesondere im landwirtschaftlichen und forstwirtschaftlichen Bereich kann es von Interesse sein, Unkräuter in jedem Wachstumsstadium und zu jeder Jahreszeit einfach anhand von Bilddaten bestimmen zu können und basierend auf dieser Bestimmung auch gleich einen Vorschlag erhalten zu können, welches Unkrautvernichtungsmittel, insbesondere Pestizid, verwendet werden kann bzw. verwendet werden soll, um die unerwünscht wachsenden Pflanzen entsprechend entfernen zu können. Darüber hinaus kann vorgesehen sein, dass die Unkrautvernichtungsmitteldaten Wirkstoffgruppendaten und/oder Herstellerdaten betreffend den Hersteller eines Unkrautvernichtungsmittels umfassen. Durch die Angabe von Wirkstoffgruppendaten können im Hinblick auf zu verwendende Unkrautvernichtungsmittel mittels des Systems gezielt geeignete Wirkstoffgruppen angegeben werden, um hierdurch die Auswahl des geeigneten Unkrautvernichtungsmittels zu erleichtern. Denkbar ist insbesondere, dass entsprechend den Präferenzen im Hinblick auf einen bestimmten Hersteller eines Unkrautvemichtungsmittels Rechnung getragen werden kann. Hierdurch kann es für den Nutzer des Systems erleichtert werden, bereits eine Vorauswahl zu treffen, so dass direkt Ihm zur Verfügung stehende Unkrautvernichtungsmittel vorgeschlagen werden und er nicht aus einer unübersichtlich großen Vielzahl von möglichen Optionen selektieren muss.

Zudem ist denkbar, dass die Unkrautentfernungseinrichtung wenigstens eine mechanische Unkrautentfernungseinrichtung In Form einer Greifvorrichtung, Trennvorrichtung, Stoßvorrichtung, Schneidevorrichtung, Quetschvorrichtung und/oder Pressvorrichtung zur mechanischen Unkrautentfernung aufweist. Insbesondere bei bereits stark belasteten Umgebungsbedingungen infolge von Überdüngung oder einem zu großen Unkrautvemichtungsmitteleinsatz ist eine rein mechanische Unkrautentfernung besonders umweltfreundlich und vorteilhaft. Im Übrigen ist die mechanische Unkrautentfernung sehr effizient und schnell, da die Unkräuter mit Wurzel entfernt werden können. Zudem kann eine mechanische Unkrautentfernungseinrichtung recht einfach, leicht und platzsparend aufgebaut sein, wodurch sich die Effizient des Systems zur System zur halbautomatischen und/oder automatischen Unkrautentfernung weiter erhöhen lässt. Ferner ist denkbar, dass die mechanische Unkrautentfernungseinrichtung ein Bodenbearbeitungsgerät ist oder in dieses integriert ist. Dadurch kann das Unkraut als Düngepflanze genutzt werden, indem es durch das Bodenbearbeitungsgerät wenigstens teilweile in den Boden eingebracht wird und dort abstirbt.

Außerdem ist möglich, dass die Unkrautentfernungseinrichtung wenigstens eine Wärmeerzeugungsvorrichtung und/oder eine optische Vorrichtung (wie eine Lichtquelle oder dergleichen), insbesondere ein Gasbrenner und/oder einen Laser, zur thermischen Unkrautentfernung aufweist. Da gewisse Unkrautspezies (z.B. Gräser) besonders im Hinblick auf zu hohe Umgebungstemperaturen absterben, ist auch diese Form der Unkrautentfernung sehr effizient und vorteilhaft. Weil es sich ferner um ein rein thermisches Verfahren handelt, ist es auch bei einer bereits stark vorbelasteten Umgebung (z.B. Böden) infolge von Überdüngung oder zu großem Unkrautvernichtungsmitteleinsatz besonders vorteilhaft. Schließlich erzeugt es keine weiteren Ablagerungen in den Böden und ist dadurch besonders umweltfreundlich. Zusätzlich kann die durch die thermische Entfernung entstehende Asche dazu verwendet werden, um die nicht zu entfernenden Kulturpflanzen zu düngen. Mittels eines Laser kann beispielsweise eine Unkrautentfernung (optisch-thermisch erfolgen. Durch die durch den Laser applizierte Energie kann Unkraut präzise und schnell entfernt werden. Denkbar ist es insbesondere, einen Laser einzusetzen, mittels dessen die Unkrautplanze zumindest teilweise verdampft bzw. derart (optisch-)thermisch geschädigt wird, dass diese abstirbt.

Des Weiteren kann vorgesehen sein, dass die Unkrautentfernungseinrichtung wenigstens eine Druckluftausströmdüse zur pneumatischen Unkrautentfernung aufweist. Diese Art der pneumatischen Unkrautentfernung kann besonders effizient und vorteilhaft in sehr lockeren, d.h. unverdichteten, Böden eingesetzt werden, in welchen die Wurzeln der Unkräuter nur wenig Halt finden. Da die pneumatische Unkrautentfernung lediglich mit unter Druck stehender Umgebungsluft arbeitet, ist somit ebenfalls eine sehr umweltfreundliche Unkrautentfernung möglich.

Ebenfalls ist vorstellbar, dass die Unkrautentfernungseinrichtung wenigstens eine Fluidausströmdüse wenigstens eines druckbeaufschlagten Fluids, insbesondere Wasser, zur hydraulischen Unkrautentfernung aufweist. Die hydraulische Unkrautentfernung kann ebenfalls wie die pneumatische Unkrautentfernung besonders effizient und vorteilhaft in sehr lockeren, d.h. unverdichteten, Böden eingesetzt werden, in welchen die Wurzeln der Unkräuter nur wenig Halt finden. Da die hydraulische Unkrautentfernung lediglich mit unter Druck stehendem Wasser arbeitet, ist somit eine sehr umweltfreundliche Unkrautentfernung möglich. Ein weiterer vorteilhafter Effekt der hydraulischen Unkrautentfernung mit Wasser ist eine zusätzliche und effiziente, weil bodennahe, Bewässerung von landwirtschaftlich genutzten Kulturpflanzen.

Darüber hinaus ist denkbar, dass die Unkrautentfernungseinrichtung wenigstens eine elektrische Wärmeerzeugungsvorrichtung zur elektro-thermischen Unkrautentfernung aufweist. Durch eine entsprechende Ausgestaltung der elektrischen Wärmeerzeugungsvorrichtung kann die zur Entfernung des Unkrauts erforderliche Wärmemenge sehr gezielt und dadurch auch besonders effizient in das betreffende Unkraut eingeleitet werden. Im Gegensatz zu einem Gasbrenner, dessen Wärmeerzeugung auf einem CO₂ emittierenden Verbrennungsprozess beruht, ist die elektro-thermische Unkrautentfernung daher zusätzlich umweltfreundlicher bzw. nachhaltiger.

Erfindungsgemäß ist der optische Sensor eine CCD-Kamera. Die Erzeugung der Unkraut-Bilddaten mittels der digitalen Kamera mit einem CCD-Chip ist für die digitale Bilderverarbeitung durch die automatische Bildverarbeitungseinheit und den anschließenden Abgleich gemeinsam mit der Unkrautdatenbankeinheit und der Unkrautbilddatenbankeinheit im Hinblick auf schnelle Verarbeitungszeit und Effizienz besonders vorteilhaft. Die digitale Kamera kann ferner optischen sehr vielfältig eingesetzt werden, da sie sowohl für sichtbare Wellenlängen als auch für Infrarot-, UV- und Röntgen-Bereiche anwendbar ist. Dadurch kann das Spektrum für optische Anwendungen besonders vorteilhaft erweitert werden (ca. 0,1 pm Wellenlänge bis ca. 1100 nm Wellenlänge). Weitere Vorteile der digitalen CCD-Kamera sind ihre breite spektrale Empfindlichkeit und ihr hoher Dynamikumfang (Fähigkeit, gleichzeitig sehr lichtschwache und sehr helle Bereiche eines Unkrauts zu erfassen).

Nicht erfindungsgemäß ist es möglich, dass das System zur halbautomatischen und/oder automatischen Unkrautentfernung in ein, insbesondere landwirtschaftliches, Fahrzeug integriert ist. Zudem ist denkbar, dass das System zur halbautomatischen und/oder automatischen Unkrautentfernung zusätzlich oder alternativ zu dem landwirtschaftlichen Fahrzeug in wenigstens ein Anbaugerät integierbar ist. Im landwirtschaftlichen Umfeld ist der Einsatz des Systems zur halbautomatischen und/oder automatischen Unkrautentfernung besonders deshalb sehr vorteilhaft, da es sich recht einfach in bestehende Fahrzeuge und/oder Anbaugeräte ohne unverhältnismäßig hohen Aufwand integrieren lässt. Dadurch kann Ernteertrag für Anwender effizient und ohne unverhältnismäßig großen Mehraufwand gesteigert werden, wodurch sich die Wettbewerbssituation des Anwenders zusätzlich verbessert.

Erfindungsgemäß ist das System zur halbautomatischen und/oder automatischen Unkrautentfernung in eine vom Menschen tragbare und betätigbare Vorrichtung zur Unkrautentfernung integriert. Der Einsatz in vom Menschen tragbaren und betätigbaren Vorrichtung zur Unkrautentfernung ist insbesondere deshalb von Vorteil, da so die unterstützende Bestimmung von Unkräutern zusätzlich zur menschlichen Bestimmung durch das System vorgenommen werden kann. Dadurch lässt sich der Anteil an richtig bestimmten Unkräutern zusätzlich steigern und insbesondere die unerwünschte Fehlbestimmung z.B. von Kulturpflanzen als Unkräuter weiter senken, wodurch ein zusätzlicher Schutz der nicht zu entfernenden Pflanzen resultiert.

Auch denkbar ist, dass die Bilddaten und Unkrautbestätigungsdaten zusätzlich Ortsdaten, z.B. GPS-Daten aufweisen. Die zusätzlichen Ortsdaten in Form von GPS-Daten sind insbesondere bei hoch automatisierten landwirtschaftlichen Fahrzeugen von Vorteil, da bei mehrmaligem Abfahren der gleichen Position die zeitliche Wachstumsentwicklung einer gewissen Unkrautpflanze bzw. die Wirkung verschiedener Unkrautentfernungsmethoden wesentlich besser, genauer und ortsbezogen beurteilbar ist. Somit können wichtige statistische Daten erhoben werden, welche für die zukünftige Verbesserung der Effizienz des Systems zur halbautomatischen und/oder automatischen Unkrautentfernung eine entscheidende Rolle spielen können.

Weitere Einzelheiten und Vorteile der Erfindung sollen nun anhand der in den Zeichnungen dargestellten Ausführungsbeispielen näher erläutert werden.

Es zeigen:
- Fig. 1: eine schematische Darstellung eines ersten Ausführungsbeispiels eines erfindungsgemäßen halbautomatischen oder automatischen Systems zur Unkrautentfernung;
- Fig. 2: eine schematische Darstellung eines zweiten Ausführungsbeispiels eines erfindungsgemäßen halbautomatischen Systems zur Unkrautentfernung;
- Fig. 3: eine schematische Darstellung eines dritten Ausführungsbeispiels eines erfindungsgemäßen halbautomatischen oder automatischen Systems zur Unkrautentfernung;
- Fig. 4: eine schematische Darstellung eines vierten Ausführungsbeispiels eines erfindungsgemäßen halbautomatischen oder automatischen Systems zur Unkrautentfernung;
- Fig. 5: eine schematische Darstellung eines fünften Ausführungsbeispiels eines erfindungsgemäßen halbautomatischen oder automatischen Systems zur Unkrautentfernung;
- Fig. 6: eine schematische Darstellung eines sechsten Ausführungsbeispiels eines erfindungsgemäßen halbautomatischen oder automatischen Systems zur Unkrautentfernung;
- Fig. 7: eine schematische Darstellung eines siebten Ausführungsbeispiels eines erfindungsgemäßen halbautomatischen oder automatischen Systems zur Unkrautentfernung; und
- Fig. 8: eine schematische Darstellung eines achten Ausführungsbeispiels eines erfindungsgemäßen halbautomatischen oder automatischen Systems zur Unkrautentfernung.

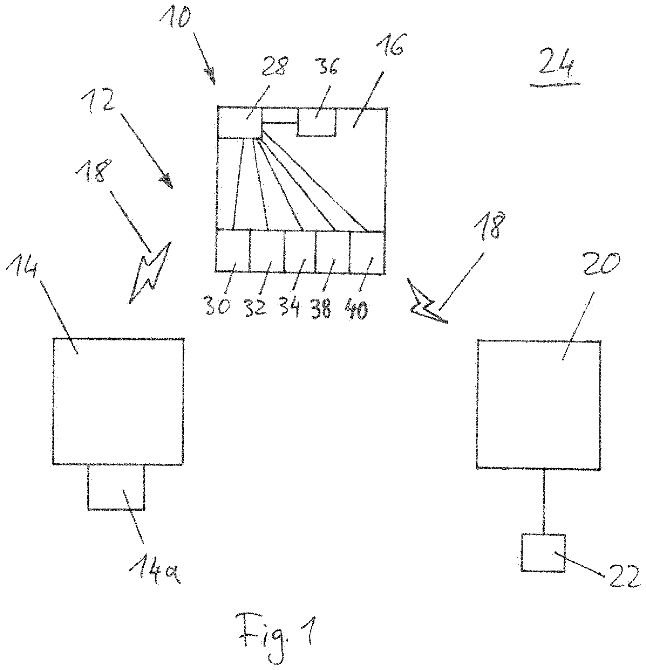

Fig. 1 zeigt eine schematische Darstellung eines ersten Ausführungsbeispiels eines erfindungsgemäßen halbautomatischen oder automatischen Systems 10 zur Unkrautentfernung.

Das in Fig. 1 gezeigte System 10 zur halbautomatischen oder automatischen Unkrautentfernung weist ein System 12 zur automatischen Erkennung von Unkraut auf.

Das System 12 zur automatischen Erkennung von Unkraut wiederum umfasst einen optischen Sensor 14 und eine zentrale Servereinheit 16.

Der optische Sensor 14 ist eine digitale Kamera 14a, welche als digitale CCD-Kamera ausgebildet ist.

Ferner umfasst das System 10 zur halbautomatischen oder automatischen Unkrautentfernung ein Kommunikationsnetzwerk 18 (insbesondere das Internet), eine Steuerungs- oder Regelungseinrichtung 20 und eine Unkrautentfernungseinrichtung 22.

Die Unkrautentfernungseinrichtung 22 ist ferner bezogen auf eine Referenzposition des optischen Sensors 14 Innerhalb eines Rasters positionierbar.

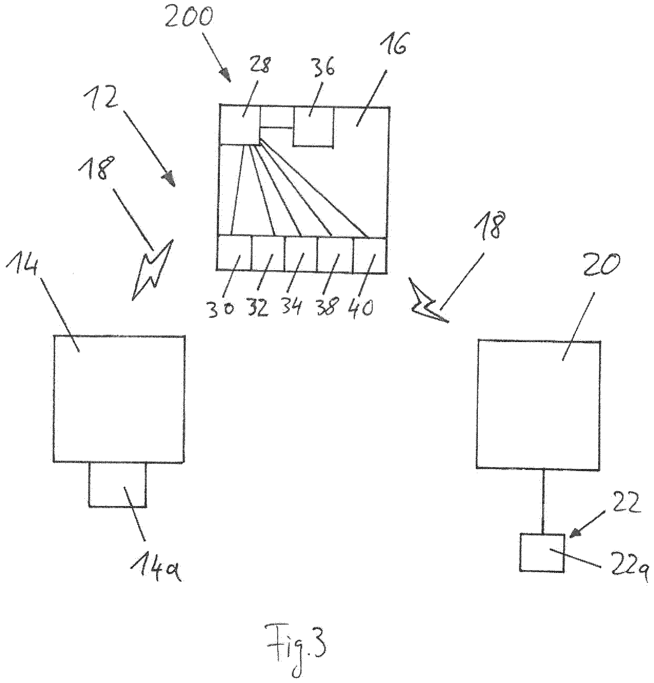

Die Unkrautentfernungseinrichtung 22 kann entsprechend den in Figuren 3 bis 8 dargestellten Unkrautentfemungseinrichtungen 22a, 22b, 22c, 22d, 22e, 22f als chemische, mechanische, thermische, pneumatische, hydraulische oder elektro-thermische Unkrautentfernungseinrichtung 22, 22a, 22b, 22c, 22d, 22e, 22f ausgebildet sein. Der optische Sensor 14, die Servereinheit 16 und die Steuerungs- oder Regelungseinrichtung 20 stehen zudem mittels des Kommunikationsnetzwerks 18 in Datenverbindung.

Weiterhin werden mittels des optischen Sensors 14 bzw. der digitalen CCD-Kamera 14a Bilddaten eines Unkrauts erzeugt und über das Kommunikationsnetzwerk 18 an die Servereinheit 16 übertragen.

Die Bilddaten weisen zusätzlich GPS-Daten auf.

Die Servereinheit 16 umfasst des Weiteren eine automatische Bildverarbeitungseinheit 28, eine Unkrautdatenbankeinheit 30, eine Unkrautbilddatenbankeinheit 32 und eine Unkrautvemichtungsmitteldatenbank 34.

Die Servereinheit 12 weist ferner neben einem Datenauswertemodul 36 noch zusätzlich eine Pflanzenkrankheitsdatenbankeinheit 38 sowie eine Pflanzenschädlingsdatenbankeinheit 40 auf.

Alle Einheiten 28, 30, 32, 34, 36, 38, 40 der zentralen Servereinheit 16 stehen zudem untereinander gemäß Fig. 1 in Datenverbindung.

Das System 10 zur halbautomatischen oder automatischen Unkrautentfernung ist gemäß Fig. 1 In ein landwirtschaftliches Fahrzeug 24 integriert.

Das langwirtschaftliche Fahrzeug 24 kann beispielsweise ein Traktor oder ein Traktorgespann sein.

Das Traktorgespann besteht z.B. aus dem Traktor und einem daran angehängten oder befestigten Anbaugerät (nicht in Fig. 1 näher dargestellt).

Die Funktion des halbautomatischen oder automatischen Systems 10 zur Unkrautentfernung lässt sich nun wie folgt beschreiben:
Zunächst werden mittels des optischen Sensors 14 bzw. der digitalen CCD-Kamera 14a Bilddaten eines Unkrauts oder mehrerer Unkräuter erzeugt und über das Kommunikationsnetzwerk 18 an die Servereinheit 16 übertragen.

Die Servereinheit 16 wertet anschließend die übertragenen Bilddaten der Unkräuter dahingehend aus, dass das jeweilige Unkraut bestimmbar ist.

Innerhalb der zentralen Servereinheit 16 wird daher mittels der automatischen Bildverarbeitungseinheit 28 eine Auswertung der übertragenen Bilddaten durchgeführt.

Die automatische Bilderkennung, die mittels der automatischen Bildverarbeitungseinheit 28 durchgeführt wird, kann sich anhand von Referenzpunkten bzw. Referenzmusterstrukturen der in den übertragenen Bildern enthaltenen Bildinformationen betreffend die aufgenommenen Unkrautpflanzen orientieren.

Diese Auswertung dient dazu, die in den Bilddaten enthaltenen Informationen zu einer Unkrautpflanze anhand der in der Unkrautbilddatenbankeinheit 32 enthaltenen Bilddaten abzugleichen und in Zusammenhang mit der Unkrautdatenbankeinheit 30 die entsprechende Unkrautpflanze automatisch zu bestimmen.

Durch das Datenauswertemodul 36 kann nach Erkennung der Unkrautpflanze automatisch anhand der in der Unkrautvernichtungsmitteldatenbankeinheit 34 enthaltenen Unkrautvernichtungsmitteldaten ein Vorschlag bereitgestellt werden, welches geeignete Unkrautvernichtungsmittel gegen das zuvor bestimmte bzw. erkannte Unkraut eingesetzt werden kann.

Denkbar ist beispielsweise auch, dass einmal korrekt erkannte Bilddaten von Unkrautpflanzen auch genutzt werden, dass beispielsweise anhand der an die zentrale Servereinheit 16 übertragenen Bilder diese Bildinformationen auch in die Unkrautdatenbankeinheit 30 mit eingespeichert werden können.

Es ist auch denkbar, dass dies erst erfolgen kann, wenn eine entsprechende Bestätigung durch einen qualifizierten Benutzer erfolgt ist.

Ein derartiger Benutzer kann ein sog. Power-User oder ein Mitarbeiter des Betreibers sein, bei dem entsprechende Kenntnisse im Hinblick auf die Unkrautpflanzen vorhanden sind.

Anhand der übertragenen Bilddaten des Unkrauts kann zusätzlich durch das Datenauswertemodul 36 und der Pflanzenkrankheitsdatenbankeinheit 38 bestimmt werden, ob und welche Krankheiten des Unkrauts vorliegen.

Hier wird insbesondere aufgrund von Farbe und/oder Struktur bzw. der entsprechenden Veränderungen erkannt, ob bzw. welche Unkrautkrankheit vorliegt. Dieser Vorgang erfolgt ebenfalls automatisch.

Anhand der übertragenen Bilddaten des Unkrauts, die abgeglichen werden, kann auch gleichzeitig erkannt werden, inwieweit Pflanzenschädlinge vorhanden sind.

Hierzu wird durch das Datenauswertemodul 36 auf die in der Pflanzenschädlingsdatenbankeinheit 40 hinterlegten Daten zurückgegriffen, die dann entsprechend mit den weiteren vorhandenen Daten verknüpft werden.

Beispielsweise kann auf die in der Unkrautvernichtungsmitteldatenbankeinheit 34 enthaltenen Daten Unkrautvernichtungsmittel oder Schädlingsbekämpfungsmittel entsprechend zurückgegriffen werden, um auch hier automatisch einen entsprechenden Vorschlag herauszusuchen, mit welchem Schädlingsbekämpfungsmittel vorgegangen werden kann.

Die Auswertung erfolgt darüber, ob auf den übertragenen Bildern beispielsweise Blattläuse, Käfer, Flöhe, Insekten oder entsprechende Abfraßmuster erkennbar sind.

Im Zusammenhang mit auftretenden Krankheiten des Unkrauts oder dessen Befall durch von Pflanzenschädlinge kann es möglich sein, die entsprechenden Ortsdaten bzw. GPS-Daten mit den Informationen betreffend die Unkrautkrankheiten bzw. das Auftreten von Pflanzenschädlingen zu verknüpfen.

Aus den Informationen betreffend Ort und das Vorkommen von Unkrautkrankheiten und Schädlingen kann das System 10, 100 entsprechend erkennen, wo diese auftreten und diese Information weitergegeben.

Ferner kann das System 10 so automatisch entscheiden, ob eine Entfernung des Unkrauts durch die Unkrautentfernungseinrichtung 22 aufgrund von Krankheiten oder Schädlingsbefall überhaupt noch notwendig ist, oder ob das Unkraut aufgrund von dieser natürlichen Schwächung ohnehin absterben- und deren Entfernung somit entbehrlich werden würde.

Hierüber lässt sich auch der Einsatz von Pflanzenschutzmitteln deutlich reduzieren bzw. die Lebensdauer der Unkrautentfernungseinrichtung 22 deutlich erhöhen.

Falls das durch die zentrale Servereinheit 16 eindeutig bestimmte Unkraut jedoch gesund ist bzw. keinen Schädlingsbefall aufweist und daher durch die Unkrautentfernungseinrichtung 22 entfernt werden sollte, geht die Servereinheit 16 automatisiert wie folgt vor:
Im Falle einer eindeutigen Bestimmung des Unkrauts werden mittels der Servereinheit 16 Unkrautbestätigungsdaten über das Kommunikationsnetzwerk 18 an die Steuerungs- oder Regelungseinrichtung 20 übertragen.

Die Unkrautbestätigungsdaten können ebenfalls GPS-Daten aufweisen, wodurch die Steuerung oder Regelung der Unkrautentfernungseinrichtung 22 präziser wird.

Die Steuerungs- oder Regelungseinrichtung 20 steuert oder regelt sodann in Antwort auf diese Unkrautbestätigungsdaten die Unkrautentfernungseinrichtung 22, so dass das durch den optischen Sensor 14 erfasste Unkraut entfernbar ist.

Dieser Fall tritt insbesondere dann ein, falls das System 10 ein System 10 automatischen Unkrautentfernung ist, da die Unkrautentfernungseinrichtung 22 das entsprechend bestimmte Unkraut sodann automatisch entfernen kann.

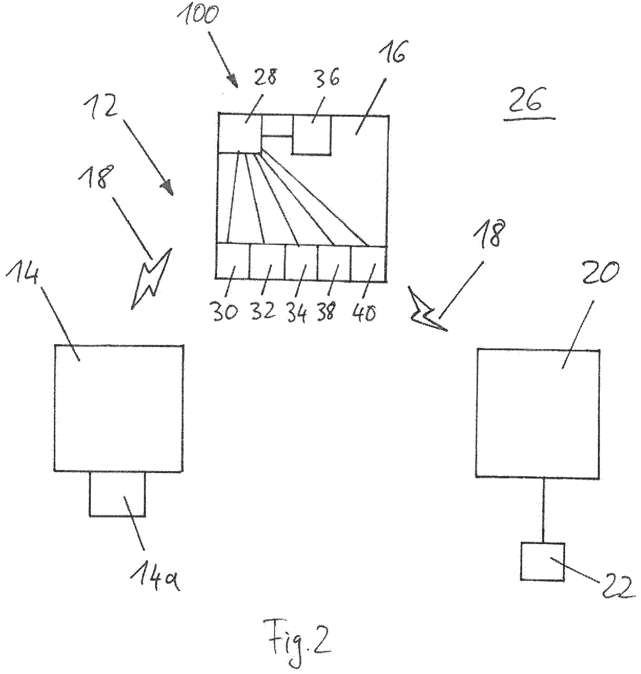

Fig. 2 zeigt eine schematische Darstellung eines zweiten Ausführungsbeispiels eines erfindungsgemäßen halbautomatischen Systems 100 zur Unkrautentfernung.

Das in Fig. 2 dargestellte zweite Ausführungsbeispiel dieses erfindungsgemäßen Systems 100 weist im Wesentlichen dieselben strukturellen und funktionalen Merkmale wie das in Fig. 1 dargestellte erste Ausführungsbeispiel des halbautomatischen oder automatischen Systems 10 zur Unkrautentfernung auf.

Lediglich die folgenden strukturellen Merkmalsunterschiede sollen aufgezeigt werden:
Das System 100 ist ein System 100 zur halbautomatischen Unkrautentfernung und ist in eine vom Menschen tragbare und betätigbare Vorrichtung 26 zur Unkrautentfernung integriert.

Eine derartige Vorrichtung 26 kann z.B. eine Motorsense, ein Freischneider, ein Gasbrenner oder ein Drucksprühgerät für Unkrautvernichtungsmittel sein.

Ferner sollen die folgenden funktionalen Merkmalsunterschlede bezüglich des in Fig. 1 dargestellten ersten Ausführungsbeispiels des halbautomatischen oder automatischen Systems 10 zur Unkrautentfernung aufgezeigt werden:
Im Falle der Integration dieses Systems 100 in die von einem Menschen tragbare und betätigbare Vorrichtung 26 zur Unkrautentfernung steuert oder regelt die Steuerungs- oder Regelungseinrichtung 20 in Antwort auf die Unkrautbestätigungsdaten z.B. eine graphische Anzeigevorrichtung, auf welcher die Unkrautbestätigungsdaten für einen Nutzer sichtbar sind.

Infolge dieser unterstützenden visuellen Unkrautbestätigungsdaten kann der Nutzer sodann das entsprechende durch die Servereinheit 16 automatisch bestimmte Unkraut mittels der Unkrautentfernungseinrichtung 22 entfernen.

Zudem ist es denkbar, dass durch Zustimmung der Unkrautbestätigungsdaten durch den Benutzer (z.B. durch Betätigung eines elektrischen Schalters) ein entsprechendes Zustimmungssignal an die Steuerungs- oder Regelungseinrichtung 20 gesendet wird, woraufhin die Unkrautentfernungseinrichtung 22 die Unkrautentfernung automatisiert vornimmt.

Fig. 3 zeigt eine schematische Darstellung eines dritten Ausführungsbeispiels eines erfindungsgemäßen halbautomatischen oder automatischen Systems 200 zur Unkrautentfernung.

Das in Fig. 3 dargestellte dritte Ausführungsbeispiel dieses erfindungsgemäßen Systems 200 weist im Wesentlichen dieselben strukturellen und funktionalen Merkmale wie das in Fig. 1 oder Fig. 2 dargestellte erste oder zweite Ausführungsbeispiel des halbautomatischen oder automatischen Systems 10, 100 zur Unkrautentfernung auf.

Lediglich die folgenden strukturellen und funktionalen Merkmalsunterschiede sollen aufgezeigt werden:
Die Unkrautentfernungseinrichtung 22 weist gemäß Fig. 3 eine Ausgabedüse 22a eines Unkrautvernichtungsmittels zur chemischen Unkrautentfernung auf.

Die dazu notendigen Bauteile wie Pumpe, Behälter, Ventile und Leitungen zur Ausgabe des druckbeaufschlagten Unkrautvernichtungsmittels mittels der Ausgabedüse 22a sind ebenfalls in das System 200 integriert.

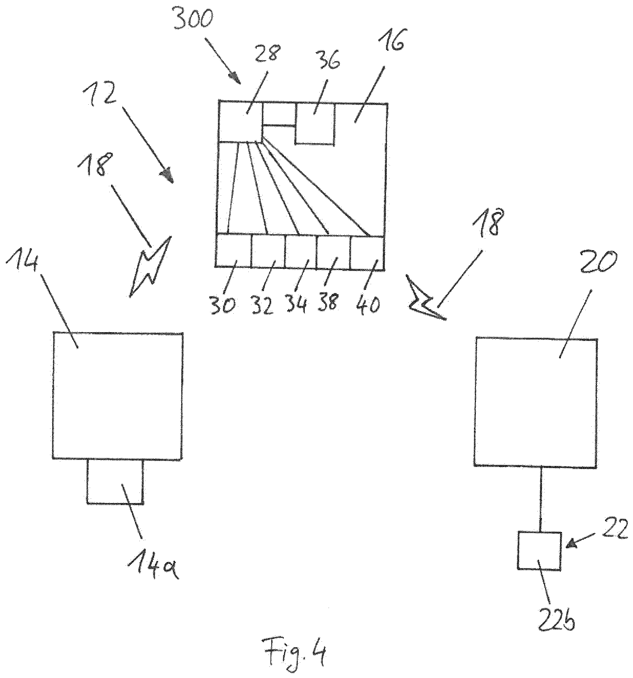

Fig. 4 zeigt eine schematische Darstellung eines vierten Ausführungsbeispiels eines erfindungsgemäßen halbautomatischen oder automatischen Systems 300 zur Unkrautentfernung.

Das in Fig. 4 dargestellte vierte Ausführungsbeispiel dieses erfindungsgemäßen Systems 300 weist im Wesentlichen dieselben strukturellen und funktionalen Merkmale wie das in Fig. 1 oder Fig. 2 dargestellte erste oder zweite Ausführungsbeispiel des halbautomatischen oder automatischen Systems 10, 100 zur Unkrautentfernung auf.

Lediglich die folgenden strukturellen und funktionalen Merkmalsunterschiede sollen aufgezeigt werden:
Die Unkrautentfernungseinrichtung 22 umfasst eine mechanische Unkrautentfernungseinrichtung 22b.

Die mechanische Unkrautentfernungseinrichtung 22b ist dabei in Form einer Greifvorrichtung, Trennvorrichtung, Stoßvorrichtung, Schneidevorrichtung, Quetschvorrichtung oder Pressvorrichtung zur mechanischen Unkrautentfernung ausgebildet.

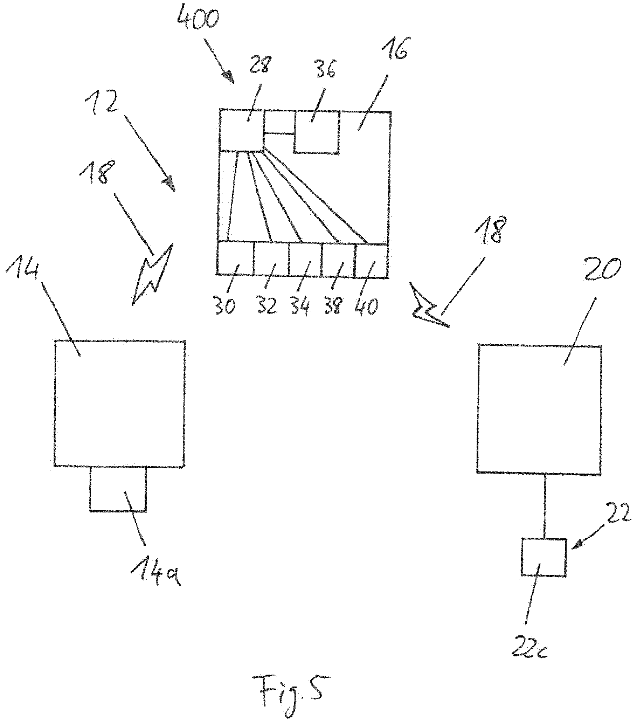

Fig. 5 zeigt eine schematische Darstellung eines fünften Ausführungsbeispiels eines erfindungsgemäßen halbautomatischen oder automatischen Systems 400 zur Unkrautentfernung.

Das in Fig. 5 dargestellte fünfte Ausführungsbeispiel dieses erfindungsgemäßen Systems 400 weist im Wesentlichen dieselben strukturellen und funktionalen Merkmale wie das in Fig. 1 oder Fig. 2 dargestellte erste oder zweite Ausführungsbeispiel des halbautomatischen oder automatischen Systems 10, 100 zur Unkrautentfernung auf.

Lediglich die folgenden strukturellen und funktionalen Merkmalsunterschiede sollen aufgezeigt werden:
Die Unkrautentfernungseinrichtung 22 weist einen Gasbrenner 22c zur thermischen Unkrautentfernung auf.

Denkbar ist in diesem Zusammenhang auch, z.B. statt eines Gasbrenners (wenigstens) einen Laser einzusetzen. Der Laser kann auch zusätzlich zu anderen Methoden hinzugefügt sein.

Die dazu notendigen Bauteile wie Gasflasche, Ventile und Leitungen zur Ausgabe des druckbeaufschlagten Gases mittels des Gasbrenners 22c sind ebenfalls in das System 400 integriert.

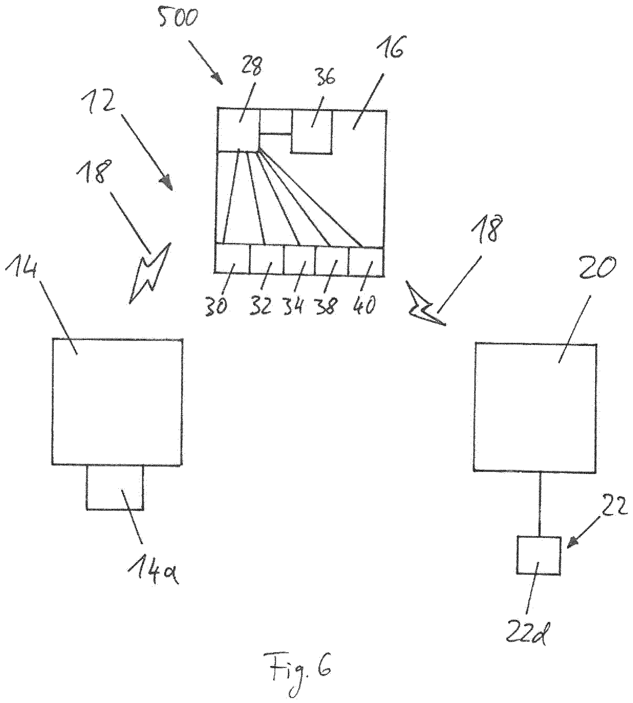

Fig. 6 zeigt eine schematische Darstellung eines sechsten Ausführungsbeispiels eines erfindungsgemäßen halbautomatischen oder automatischen Systems 500 zur Unkrautentfernung.

Das in Fig. 6 dargestellte sechste Ausführungsbeispiel dieses erfindungsgemäßen Systems 500 weist im Wesentlichen dieselben strukturellen und funktionalen Merkmale wie das in Fig. 1 oder Fig. 2 dargestellte erste oder zweite Ausführungsbeispiel des halbautomatischen oder automatischen Systems 10, 100 zur Unkrautentfernung auf.

Lediglich die folgenden strukturellen und funktionalen Merkmalsunterschiede sollen aufgezeigt werden:
Die Unkrautentfernungseinrichtung 22 weist eine Druckluftausströmdüse 22d zur pneumatischen Unkrautentfernung auf.

Die dazu notendigen Bauteile wie Druckluftkompressor, Druckluftbehälter, Ventile und Leitungen zur Ausgabe der Druckluft mittels der Druckluftausströmdüse 22d sind ebenfalls in das System 500 integriert.

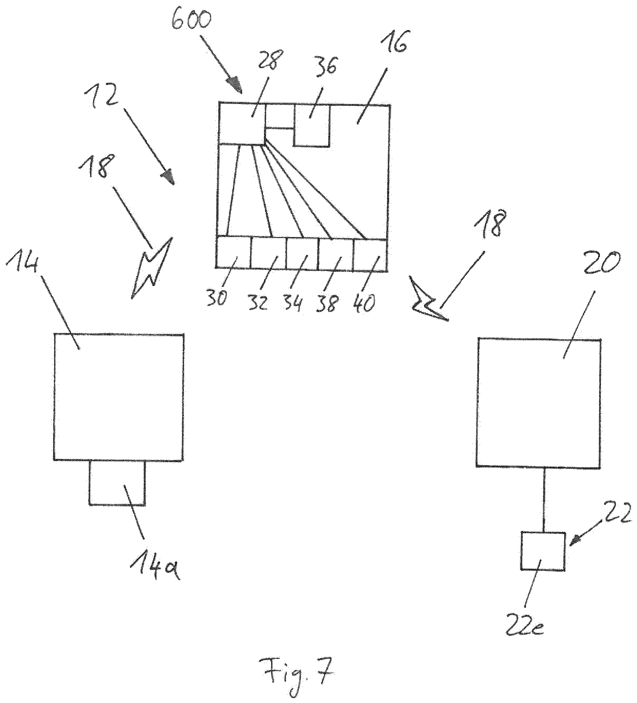

Fig. 7 zeigt eine schematische Darstellung eines siebten Ausführungsbeispiels eines erfindungsgemäßen halbautomatischen oder automatischen Systems 600 zur Unkrautentfernung.

Das in Fig. 7 dargestellte siebte Ausführungsbeispiel dieses erfindungsgemäßen Systems 600 weist im Wesentlichen dieselben strukturellen und funktionalen Merkmale wie das in Fig. 1 oder Fig. 2 dargestellte erste oder zweite Ausführungsbeispiel des halbautomatischen oder automatischen Systems 10, 100 zur Unkrautentfernung auf.

Lediglich die folgenden strukturellen und funktionalen Merkmalsunterschiede sollen aufgezeigt werden:
Die Unkrautentfernungseinrichtung 22 weist eine Fluidausströmdüse 22e für druckbeaufschlagtes Wasser zur hydraulischen Unkrautentfernung auf.

Die dazu notendigen Bauteile wie Wasserpumpe, Wasserbehälter, Ventile und Leitungen zur Ausgabe des druckbeaufschlagten Wassers mittels der Fluidausströmdüse 22e sind ebenfalls in das System 600 integriert.

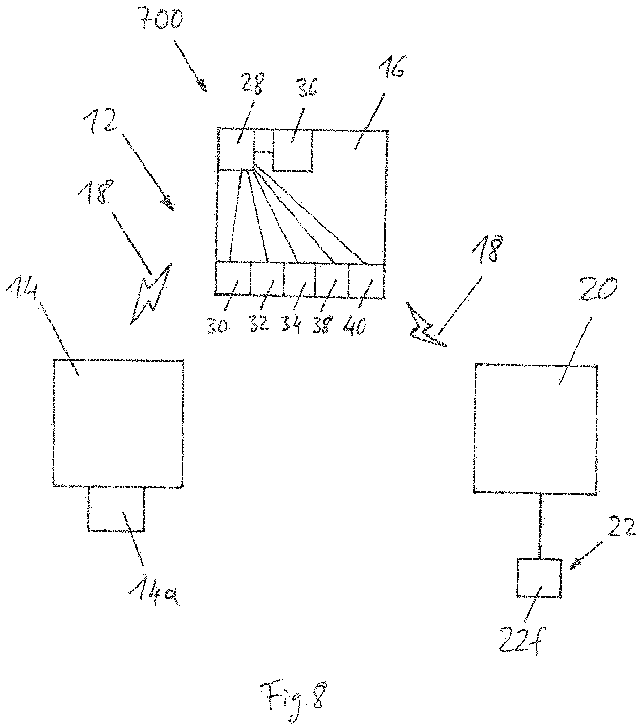

Fig. 8 zeigt eine schematische Darstellung eines achten Ausführungsbeispiels eines erfindungsgemäßen halbautomatischen oder automatischen Systems 700 zur Unkrautentfernung.

Das in Fig. 8 dargestellte achte Ausführungsbeispiel dieses erfindungsgemäßen Systems 700 weist im Wesentlichen dieselben strukturellen und funktionalen Merkmale wie das in Fig. 1 oder Fig. 2 dargestellte erste oder zweite Ausführungsbeispiel des halbautomatischen oder automatischen Systems 10, 100 zur Unkrautentfernung auf.

Lediglich die folgenden strukturellen und funktionalen Merkmalsunterschiede sollen aufgezeigt werden:
Die Unkrautentfernungseinrichtung 22 weist ferner eine elektrische Wärmeerzeugungsvorrichtung 22f zur elektro-thermischen Unkrautentfernung auf.

Die dazu notendigen elektrischen Bauelemente wie Stromversorgung, Transformator, Schaltungs- und Steuerungseinrichtungen und elektrische Leitungen zur Erwärmung elektrischen Wärmeerzeugungsvorrichtung 22f sind ebenfalls in das System 700 integriert.

### Bezugszeichenliste

- 10: System zur halbautomatischen oder automatischen Unkrautentfernung
- 12: System zur automatischen Erkennung von Unkraut
- 14: optischer Sensor
- 14a: digitale CCD-Kamera
- 16: zentrale Servereinheit
- 18: Kommunikationsnetzwerk
- 20: Steuerungs- oder Regelungseinrichtung
- 22: Unkrautentfernungseinrichtung
- 22a: Ausgabedüse eines Unkrautvernichtungsmittels
- 22b: mechanische Unkrautentfernungseinrichtung
- 22c: Wärmeerzeugungsvorrichtung
- 22d: Druckluftausströmdüse
- 22e: Fluidausströmdüse
- 22f: elektrische Wärmeerzeugungsvorrichtung
- 24: landwirtschaftliches Fahrzeug
- 26: vom Menschen tragbare und betätigbare Vorrichtung zur Unkrautentfernung
- 28: Bildverarbeitungseinheit
- 30: Unkrautdatenbankeinheit
- 32: Unkrautbilddatenbankeinheit
- 34: Unkrautvernichtungsmitteldatenbank
- 36: Datenauswertemodul
- 38: Pflanzenkrankheitsdatenbankeinheit
- 40: Pflanzenschädlingsdatenbankeinheit

- 100: System zur halbautomatischen oder automatischen Unkrautentfernung
- 200: System zur halbautomatischen oder automatischen Unkrautentfernung
- 300: System zur halbautomatischen oder automatischen Unkrautentfernung
- 400: System zur halbautomatischen oder automatischen Unkrautentfernung
- 500: System zur halbautomatischen oder automatischen Unkrautentfernung
- 600: System zur halbautomatischen oder automatischen Unkrautentfernung
- 700: System zur halbautomatischen oder automatischen Unkrautentfernung

## Patentansprüche

1. Eine vom Menschen tragbare und betätigbare Vorrichtung (26), in die ein System (10, 100, 200, 300, 400, 500, 600) zur halbautomatischen und/oder automatischen Unkrautentfernung integriert ist, wobei das System (10, 100, 200, 300, 400, 500, 600) die folgenden Merkmale umfasst, wenigstens ein System (12) zur automatischen Erkennung von Unkraut, das wenigstens einen optischen Sensor (14) und eine zentrale Servereinheit (16) aufweist, wenigstens ein Kommunikationsnetzwerk (18), wenigstens eine Steuerungs- und/oder Regelungseinrichtung (20) und wenigstens eine Unkrautentfernungseinrichtung (22), wobei der optische Sensor (14), die Servereinheit (16) und die Steuerungs- und/oder Regelungseinrichtung (20) mittels des Kommunikationsnetzwerks (18) in Datenverbindung stehen, wobei mittels des optischen Sensors (14), wobei der optische Sensor (14) eine CCD-Kamera ist, Bilddaten wenigstens eines Unkrauts erzeugbar und über das Kommunikationsnetzwerk (18) an die Servereinheit (16) übertragbar sind, welche die übertragenen Bilddaten dahingehend auswertet, dass das Unkraut durch die Servereinheit (16) bestimmbar ist, und wobei mittels der Servereinheit (16) im Falle einer eindeutigen Bestimmung des Unkrauts Unkrautbestätigungsdaten über das Kommunikationsnetzwerk (18) an die Steuerungs- und/oder Regelungseinrichtung (20) übertragbar sind, welche in Antwort auf die Unkrautbestätigungsdaten die Unkrautentfernungseinrichtung (22) steuert und/oder regelt, so dass das durch den optischen Sensor (14) erfasste Unkraut mit mechanischen oder thermischen Mitteln entfernbar ist.

2. Vorrichtung (26) nach Anspruch 1, **dadurch gekennzeichnet, dass** die Unkrautentfernungseinrichtung (22) bezogen auf eine Referenzposition, insbesondere eine Referenzposition des optischen Sensors (14), innerhalb eines Rasters positionierbar ist.

3. Vorrichtung (26) nach Anspruch 1 Oder Anspruch 2, **dadurch gekennzeichnet, dass** die Unkrautentfernungseinrichtung (22) wenigstens eine Ausgabedüse (22a) wenigstens eines Unkrautvernichtungsmittels zur chemischen Unkrautentfernung aufweist.

4. Vorrichtung (26) nach einem der Anspruche 1 bis 3, **dadurch gekennzeichnet, dass** die Unkrautentfernungseinrichtung (22) wenigstens eine mechanische Unkrautentfernungseinrichtung (22b) in Form einer Greifvorrichtung, Trennvorrichtung, Störvorrichtung, Schneidevorrichtung, Quetschvorrichtung und/oder Pressvorrichtung zur mechanischen Unkrautentfernung aufweist.

5. Vorrichtung (26) nach einem der vorhergehenden Ansprüche, **dadurch gekennzeichnet, dass** die Unkrautentfernungseinrichtung (22) wenigstens eine Wärmeerzeugungsvorrichtung (22c) und/oder optische Vorrichtung, insbesondere ein Gasbrenner und/oder einen Laser, zur thermischen Unkrautentfernung aufweist.

6. Vorrichtung (26) nach einem der vorhergehenden Ansprüche, **dadurch gekennzeichnet, dass** die Unkrautentfernungseinrichtung (22) wenigstens eine Druckluftausstromdüse (22d) zur pneumatischen Unkrautentfernung aufweist.

7. Vorrichtung (26) nach einem der vorhergehenden Ansprüche, **dadurch gekennzeichnet, dass** die Unkrautentfernungseinrichtung (22) wenigstens eine Fluidausströmdüse (22e) wenigstens eines druckbeaufschlagten Fluids, insbesondere Wasser, zur hydraulischen Unkrautentfernung aufweist.

8. Vorrichtung (26) nach einem der vorhergehenden Ansprüche, **dadurch gekennzeichnet, dass** die Unkrautentfernungseinrichtung (22) wenigstens eine elektrische Wärmeerzeugungsvorrichtung (22f) zur elektro-thermischen Unkrautentfernung aufweist.

9. Vorrichtung (26) nach Anspruch 1, **dadurch gekennzeichnet, dass** die Bilddaten und Unkrautbestätigungsdaten zusätzlich Ortsdaten, z.B. GPS-Daten aufweisen.

## Claims

1. A device (26) that can be carried and operated by a person, into which a system (10, 100, 200, 300, 400, 500, 600) for semi-automatic and/or automatic weed removal is integrated, wherein the system (10, 100, 200, 300, 400, 500, 600) comprises the following features:
at least one system (12) for automatic weed detection, which comprises at least one optical sensor (14) and a central server unit (16), at least one communication network (18), at least one control and/or regulating apparatus (20) and at least one weed removal apparatus (22), wherein the optical sensor (14), the server unit (16) and the control and/or regulating apparatus (20) are connected for data transfer by means of the communication network (18), wherein image data of at least one weed can be generated by means of the optical sensor (14), the optical sensor (14) being a CCD camera, and can be transmitted via the communication network (18) to the server unit (16), which evaluates the transmitted image data to the effect that the weed can be determined by the server unit (16), and wherein, in the event of clear determination of the weed, weed confirmation data can be transmitted by means of the server unit (16) via the communication network (18) to the control and/or regulating apparatus (20), which in response to the weed confirmation data controls and/or regulates the weed removal apparatus (22) such that the weed detected by the optical sensor (14) can be removed by mechanical or thermal means.

2. The device (26) according to claim 1, **characterized in that** the weed removal apparatus (22) can be positioned within a grid with respect to a reference position, in particular a reference position of the optical sensor (14).

3. The device (26) according to claim 1 or claim 2, **characterized in that** the weed removal apparatus (22) comprises at least one dispensing nozzle (22a) for at least one weed-killing agent for chemical weed removal.

4. The device (26) according to any one of claims 1 to 3, **characterized in that** the weed removal apparatus (22) comprises at least one mechanical weed removal apparatus (22b) in the form of a gripping device, severing device, disturbing device, cutting device, crushing device and/or pressing device for mechanical weed removal.

5. The device (26) according to any one of the preceding claims, **characterized in that** the weed removal apparatus (22) comprises at least one heat-generating device (22c) and/or optical device, in particular a gas burner and/or a laser, for thermal weed removal.

6. The device (26) according to any one of the preceding claims, **characterized in that** the weed removal apparatus (22) comprises at least one compressed air outlet nozzle (22d) for pneumatic weed removal.

7. The device (26) according to any one of the preceding claims, **characterized in that** the weed removal apparatus (22) comprises at least one fluid outlet nozzle (22e) for at least one pressurized fluid, in particular water, for hydraulic weed removal.

8. The device (26) according to any one of the preceding claims, **characterized in that** the weed removal apparatus (22) comprises at least one electric heat-generating apparatus (22f) for electrothermal weed removal.

9. The device (26) according to claim 1, **characterized in that** the image data and weed confirmation data additionally comprise location data, for example GPS data.

## Revendications

1. Dispositif portable et actionnable par des humains (26), dans lequel un système (10, 100, 200, 300, 400, 500, 600) pour le retrait de mauvaises herbes semi-automatique et/ou automatique est intégré, dans lequel le système (10, 100, 200, 300, 400, 500, 600) comprend les caractéristiques suivantes :
au moins un système (12) de détection automatique de mauvaises herbes qui comporte au moins un capteur optique (14) et une unité de serveur centrale (16), au moins un réseau de communication (18), au moins un dispositif de réglage ou de commande (20) et au moins un dispositif de retrait de mauvaises herbes (22), dans lequel le capteur optique (14), l'unité de serveur (16) et le dispositif de réglage ou de commande (20) échangent des données via le réseau de communication (18), dans lequel le capteur optique (14) peut produire des données d'image d'au moins une mauvaise herbe, le capteur optique (14) étant une caméra CCD, et les transmettre à l'unité de serveur (16) via le réseau de communication (18), lesdites données analysant les données d'image transmises afin de permettre de déterminer la présence de mauvaises herbes au travers de l'unité de serveur (16) et dans lequel le réseau de communication (18) peut transmettre les données de confirmation de mauvaise herbe au dispositif de réglage et de commande (20) à l'aide de l'unité de serveur (16) en cas de détermination univoque de la mauvaise herbe, ladite unité de serveur commandant et/ou réglant alors le dispositif de retrait de mauvaises herbes (22), de sorte que la mauvaise herbe détectée par le capteur optique (14) puisse être retiré par des moyens mécaniques ou thermiques.

2. Dispositif (26) selon la revendication 1, **caractérisé en ce que** le dispositif de retrait de mauvaises herbes (22) peut être positionné par rapport à une position de référence, notamment une position de référence du capteur optique (14), à l'intérieur d'une trame.

3. Dispositif (26) selon la revendication 1 ou 2, **caractérisé en ce que** le dispositif de retrait de mauvaises herbes (22) comporte au moins une buse d'éjection (22a) d'au moins un moyen de désintégration de mauvaises herbes pour le retrait chimique des mauvaises herbes.

4. Dispositif (26) selon l'une quelconque des revendications 1 à 3, **caractérisé en ce que** le dispositif de retrait de mauvaises herbes (22) comporte au moins un dispositif de retrait mécanique de mauvaises herbes (22b) sous la forme d'un dispositif de préhension, d'un dispositif de retrait, d'un dispositif de destruction, d'un dispositif de pincement et/ou d'un dispositif de compression pour le retrait mécanique des mauvaises herbes.

5. Dispositif (26) selon l'une quelconque des revendications précédentes, **caractérisé en ce que** le dispositif de retrait de mauvaises herbes (22) comporte au moins un dispositif de production de chaleur (22c) et/ou un dispositif optique, notamment un brûleur à gaz et/ou un laser, pour le retrait thermique des mauvaises herbes.

6. Dispositif (26) selon l'une quelconque des revendications précédentes, **caractérisé en ce que** le dispositif de retrait de mauvaises herbes (22) comporte au moins une buse de sortie d'air sous pression (22d) pour le retrait pneumatique des mauvaises herbes.

7. Dispositif (26) selon l'une quelconque des revendications précédentes, **caractérisé en ce que** le dispositif de retrait de mauvaises herbes (22) comporte au moins une buse de sortie de fluide (22e) d'au moins un fluide sous pression, notamment de l'eau, pour le retrait hydraulique des mauvaises herbes.

8. Dispositif (26) selon l'une quelconque des revendications précédentes, **caractérisé en ce que** le dispositif de retrait de mauvaises herbes (22) comporte au moins un dispositif électrique de production de chaleur (22f) pour le reetrait électro-thermique des mauvaises herbes.

9. Dispositif (26) selon la revendication 1, **caractérisé en ce que** les données d'image et les données de confirmation de mauvaise herbe comportent en outre des données de géolocalisation, par exemple des données GPS.
